# EUROPEAN PATENT APPLICATION

(11) **EP 4 670 800 A1**
(43) Date of publication of application: **31.12.2025**
(21) Application number: 25150090.6
(22) Date of filing: 02.01.2025
(51) Int. Cl.: A62C 3/16, A62C 35/02, H01M 50/204, A62C 37/36, A62C 37/40, H01M 50/143, H01M 50/383

(54) **ENERGY STORAGE CONTAINER**

(30) Priority: 24.06.2024 CN 202421452743 U; 04.09.2024 WO PCT/CN2024/116795
(71) Applicant: Eve Energy Storage Co., Ltd, Wuhan, Hubei 430074 (CN)
(72) Inventor: JIANG, Min, Wuhan, Hubei, 430074 (CN); ZHANG, Kuibo, Wuhan, Hubei, 430074 (CN); WANG, Mengchun, Wuhan, Hubei, 430074 (CN); XIONG, Heming, Wuhan, Hubei, 430074 (CN); XU, Xiaowei, Wuhan, Hubei, 430074 (CN)
(74) Representative: Berggren Oy

(57) **Abstract**

The present application provides an energy storage container including a container body, battery clusters, and a fire-fighting system. The container body includes a top cover and a bottom cover oppositely disposed. The container body is provided with a battery compartment, and the top cover and the bottom cover surround a top portion and a bottom portion of the battery compartment, respectively. The battery clusters are disposed in the battery compartment. The fire-fighting system includes fire-fighting devices uniformly dispersedly arranged among the battery clusters and the top cover.

## Description

### TECHNICAL FIELD

The present disclosure relates to the technical field of the energy storage equipment, and more particularly, to an energy storage container.

### BACKGROUND

Generally, the energy storage container is configured to be of a case structure with a certain size, and the 20-foot 5 megawatt-hours (referred briefly to as MWh) liquid-cooled energy storage container is a liquid-cooled energy storage system with the highest volumetric specific energy at present. A PACK (battery module), a PDU (high-pressure tank),a fire-fighting system, a liquid-cooling system, a combiner cabinet, a complex wiring harness, and the like are required to be placed in a limited space of the energy storage container. To integrate all the above components into the 20-foot container, the length, the width, and the height of the container tend to exceed a standard size.

### SUMMARY

In the related art, the fire-fighting system adopts a traditional large-scale fire-fighting device. The dimension of the large-scale fire-fighting device is represented by length×width×height, especially, 340mm×330mm×1350mm. Therefore, it is often necessary to set up an independent equipment compartment inside the case to place the large-scale fire-fighting device. The equipment compartment is located on one side of the battery compartment. The large-scale fire-fighting device is placed vertically in the energy storage container, which will result in a larger space being reserved in the length direction of the container to set up the equipment compartment. Therefore, it further causes to difficultly optimize the space inside the energy storage container.

Embodiments of the present application provide an energy storage container including:
a container body including a top cover and a bottom cover oppositely disposed, in which the container body is provided with a battery compartment, the top cover and the bottom cover surround a top portion and a bottom portion of the battery compartment, respectively;
a plurality of battery clusters disposed in the battery compartment, in which each of the plurality of battery clusters includes a plurality of battery modules;
a fire-fighting system including a plurality of fire-fighting devices uniformly dispersedly arranged among the plurality of battery clusters and the top cover.

### BENEFICIAL EFFECT

According to the energy storage container provided in the present application, by providing a plurality of fire-fighting devices, the size of each fire-fighting device can be miniaturized, so that the plurality of fire-fighting devices can be dispersedly arranged in the space among the top portions of the battery modules and the top cover, thereby making full use of the space in the height direction of the container. Further, since the plurality of fire-fighting devices can be dispersedly arranged in the space among the top portions of the battery modules and the top cover, it is not necessary to provide a separate equipment compartment at one side of the battery compartment to place the fire-fighting devices, thereby improving the space utilization rate in the lengthwise direction of the energy storage container.

### BRIEF DESCRIPTION OF THE DRAWINGS

FIG. 1 is a perspective view of an energy storage container according to embodiments of the present application;
FIG. 2 is an internal configuration diagram of an energy storage container viewed from an angle according to embodiments of the present application;
FIG. 3 is a perspective view of fire-fighting devices mounted on a top cover according to embodiments of the present application is;
FIG. 4 is a top configuration diagram of an energy storage container according to embodiments of the present application;
FIG. 5 is an arrangement diagram of a fire-fighting system according to embodiments of the present application;
FIG. 6 is a front view of a fire-fighting device according to embodiments of the present application;
FIG. 7 is a bottom view of a fire-fighting device according to embodiments of the present application; and
FIG. 8 is a schematic diagram showing an internal structure of a container body according to embodiments of the present application.

### Reference signs:

1. energy storage container; 10. container body; 11. top cover; 12. bottom cover; 13. side plate; 14. battery compartment; 15. liquid cooling compartment; 16. electric compartment; 17. combiner cabinet; 18. power distribution cabinet; 20. battery cluster; 21. battery module; 30. fire-fighting system; 31. fire-fighting device; 311, fire-fighting device row; 32. fire-fighting box; 33. fire-fighting detector; 331. smoke sensor detector; 332. temperature sensor detector; 333. combustible gas detector; 34. fire-fighting conduit; 35. fire-fighting fan; 40. liquid cooling pipe; 41. first-stage pipeline; 411. water inlet pipe; 412, water return pipe; 42. second-stage pipeline; 43. three-stage pipeline; and 50. dehumidifier.

### DETAILED DESCRIPTION

The energy storage container is generally configured in a case structure with a certain size, and the 20-foot 5MWh liquid-cooled energy storage container is a liquid-cooled energy storage system with the highest volumetric specific energy at present. The PACKs (battery modules), PDUs (high-pressure tanks), fire-fighting systems, liquid-cooled systems, combiner cabinets, complex wiring harnesses and the like need to be placed in the limited space of the energy storage container. To integrate all of the above components into the 20-foot container, the length, the width and the height of the container tend to exceed the standard size. In the related art, the fire-fighting system employs a conventional large-scale perfluorohexanone fire-fighting device, and the dimension, ie., length×width×height, of the large-scale fire-fighting device is usually set to 340mm×330mm×1350mm. So, it is often necessary to set up an independent equipment compartment inside the container to place the large-scale fire-fighting device. The equipment compartment is located at one side of the battery compartment. The large-scale fire-fighting device is placed vertically in the energy storage container, which will result in a larger space being reserved in the length direction of the container to set up the equipment compartment. Therefore, it further causes to optimize difficultly the space inside the energy storage container.

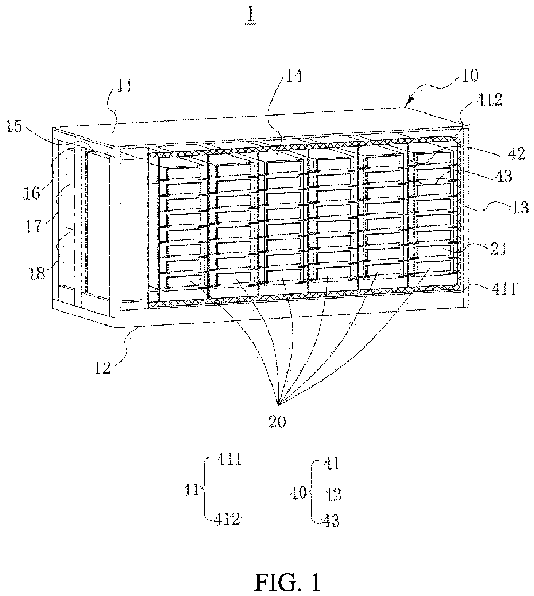

An embodiment of the present application provides an energy storage container 1, so that a plurality of battery modules 21, a fire-fighting system 30, a liquid cooling system, the electrical equipment, and the like can be arranged in an effective space inside the energy storage container 1 by optimizing a structure of the fire-fighting system 30 provided inside the energy storage container 1. As shown in FIGS. 1 to 5, the energy storage container 1 includes:
a container body 10 including a top cover 11 and a bottom cover 12 oppositely disposed, where a battery compartment 14 is disposed inside the container body 10, and the top cover 11 and the bottom cover 12 surround a top portion and a bottom portion of the battery compartment 14, respectively;
a plurality of battery clusters 20 disposed in the battery compartment 14, in which each of the battery clusters 20 includes a plurality of battery modules 21; and
a fire-fighting system 30 including a plurality of fire-fighting devices 31 dispersedly arranged among the plurality of battery clusters 20 and the top cover 11.

By providing the plurality of fire-fighting devices 31, the size of each fire-fighting device 31 can be miniaturized, so that the plurality of fire-fighting devices 31 can be interspersed in the space between the top portions of the battery modules 21 and the top cover 11, thereby making full use of the space in the height direction of the container.

Further, since the plurality of fire-fighting devices 31 can be interspersed in the space among the top portions of the battery modules 21 and the top cover 11, it is not necessary to set up a separate equipment compartment at a side of the battery compartment 14 to provide the fire-fighting devices 31, thereby facilitating the improvement of the space utilization rate in the lengthwise direction of the energy storage container 1.

In a specific implementation, the above-described container body 10 includes a top cover 11 and a bottom cover 12 oppositely disposed, and a plurality of side plates 13 connected between the top cover 11 and the bottom cover 12. The plurality of side plates 13 include a left side plate, a right side plate, a front side plate, and a rear side plate. The left side plate and the right side plate are oppositely disposed, and the front side plate and the rear side plate are oppositely disposed. The container body 10 includes a length direction, a width direction, and a height direction perpendicular to each other. A length of the container body 10 is set to a distance extending in the length direction thereof, and the length of the container body 10 is set to a distance between the left side plate and the right side plate. A width of the container body 10 is set to a width extending in the width direction thereof, and the width of the container body 10 is set to a distance between the front side plate and the rear side plate. A height of the container body 10 is set to a distance extending in the height direction thereof, and the height of the container body 10 is set to a distance between the top cover 11 and the bottom cover 12.

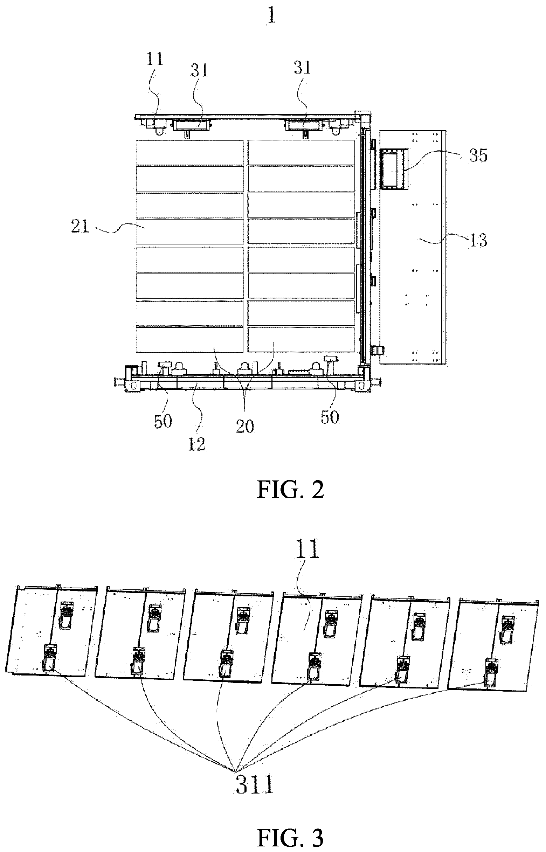

As shown in FIGS. 2 and 3, the energy storage container 1 includes a plurality of battery clusters 20 each configured to consist of a plurality of the battery modules 21. Each of the fire-fighting devices 31 is provided corresponding to at least one of the battery clusters 20.

The battery cluster 20 is configured as a plurality of battery modules 21 stacked in the height direction of the energy storage container 1. The plurality of battery modules 21 are connected in series, in parallel, or mixed couplings to form the battery cluster 20 having a certain voltage and a certain capacity, thereby satisfying the capacity design requirement of the energy storage container 1.

The plurality of battery clusters 20 are disposed inside the battery compartment 14, and a plurality of fire-fighting devices 31 are disposed above the battery compartment 14, thereby facilitating to improve the overall fire-fighting capability of the fire-fighting system 30. When a fire risk occurs in a certain battery cluster 20, it is possible to control the fire-fighting devices 31 to start to extinguish the fire synchronously. And, the position arrangement of the plurality of fire-fighting devices 31 is more dispersed with respect to the position arrangement of a single large-scale fire-fighting device 31. In this way, the overall fire extinguishing efficiency of the fire-fighting system 30 can be improved.

Further, a separate fire-fighting device 31 is provided for each battery cluster 20. When the fire risk occurs to a certain battery cluster 20, the fire-fighting device 31 provided corresponding to the battery cluster 20 can quickly start a fire extinguishing operation, so that a fire caused by the certain battery cluster 20 can be prevented from spreading to the battery clusters 20 surrounding the certain battery cluster 20, and the loss of the fire can be minimized.

Taking the 20-foot 5MWh liquid-cooled energy storage container as an example, in the embodiment of the present application, the structure inside the container body 10 is optimized so that the length of the container body 10 is set to 6200mm, the width of the container body 10 is set to 2550mm, and the height of the container body 10 is set to 2896mm. With respect to the related art in which the size of the container body of the 20-foot 5MWh liquid-cooled energy-storage container is generally set to 6250mm (length)×2550mm (width)×3100mm (height), the sizes in the length direction and the height direction of the container body 10 of the energy-storage container 1 in the present application are significantly reduced.

Further referring to FIGS. 2 and 3, the plurality of fire-fighting devices 31 are mounted on the top cover 11, and the fire-fighting devices 31 each include a fire-fighting bottle horizontally mounted on the top cover 11.

In a specific implementation, the plurality of fire-fighting devices 31 are fixed to the top cover 11 by means of a bracket.

It will be appreciated that the fire-fighting device 31 is generally provided in the shape of a barrel. The fire-fighting device 31 includes a length direction, a width direction, and a height direction perpendicular to each other. A length of the fire-fighting device 31 is set as a length extending in the length direction thereof, a width of the fire-fighting device 31 is set as a width extending in the width direction thereof, and a height of the fire-fighting device 31 is set as a height extending in the height direction thereof. The size of the individual fire-fighting device 31 is miniaturized so that the height of the individual fire-fighting device 31 is larger than the length or the width of the individual fire-fighting device 31. And, the plurality of fire-fighting devices 31 are horizontally placed in the spacing between the top portions of the battery modules 21 and the top cover 11. In this way, the length direction or the width direction of the fire-fighting device 31 coincides with the height direction of the container body 10, thereby significantly reducing the space in the height direction of the container body 10 occupied by the fire-fighting devices 31.

The energy storage container 1 further includes a battery bracket provided inside the container body 10. The battery bracket includes stacked plates and upright posts. The stacked plates are fixed to the upright posts. At least one battery module 21 is fixed between two adjacent stacked plates.

In a further preferred embodiment, the energy storage container 1 may be the 20-foot 5MWh liquid-cooled energy storage container, the number of battery clusters 20 provided in the container body 10 ranges from 10 to 12, and the number of fire-fighting devices 31 provided in the container body 10 ranges from 10 to 12.

In one example, as shown in FIGS. 1 and 2, the number of the battery clusters 20 in the container body 10 is twelve. Every six battery clusters 20 are arranged side by side along the length direction of the energy storage container 1, every two battery clusters 20 are arranged in parallel along the width direction of the energy storage container 1, and each battery cluster 20 includes eight battery modules 21 stacked in the height direction of the container body 10. Correspondingly, one fire-fighting device 31 is provided at the top portion of each battery cluster 20, and twelve fire-fighting devices 31 are provided inside the energy storage container 1.

It will be appreciated that the number of batteries 20 may also be 10 or 11. Correspondingly, the number of fire-fighting devices 31 may be 10 or 11. The number of fire-fighting devices 31 is less than or equal to the number of battery clusters 20.

Further, taking the 20-foot 5MWh liquid-cooled container as an example, the inventor further analyzes the fire-fighting capacity of the fire-fighting device 31 and the fire-fighting regulation requirements required for the energy-storage container 1, and finds that the ratio of the number of the fire-fighting devices 31 to the number of the battery clusters 20 in the container body 10 is not less than 1 to 2. The mass of the fire-fighting gas that can be discharged from each of the fire-fighting devices 31 ranges from 2kg to 3kg. When the ratio of the number of the fire-fighting devices 31 to the number of the battery clusters 20 in the container body 10 is set to be less than 1/2, the energy storage container 1 cannot meet the requirements of the fire-fighting regulations. In a case where the inside space of the container body 10 is allowable, a sufficient number of fire-fighting devices 31 can be arranged inside the container body 10 as many as possible, so that the fire extinguishing performance of the energy storage container 1 can be sufficiently improved. Therefore, the upper limit of the ratio of the number of the fire-fighting devices 31 to the number of the battery clusters 20 is not specifically limited.

According to the requirements of the fire extinguishing regulation, i.e., the community standard T/CECS 10171-2022 "Pre-engineered perfluorohexanone fire-fighting device", required for the energy storage container 1, the fire extinguishing time has following requirements. For the B-type n-heptane fire, the test is carried out according to the methods specified in sections 7.11 and 7.12 in the fire rescue standard of the People's Republic of China, i.e., XF 499.1-2010, and the concentration of the flammable gas, i.e., n-heptane, that is tested to be extinguished requires to be at a minimum volume ratio of 5.9%; the fire-fighting device should extinguish the open fire within 30 seconds after the end of the injection, and no re-ignition occurs within 1 minute.

According to a test performed according to the method specified in the above-mentioned fire extinguishing regulation, it was found that in the 20-foot 5MWh liquid-cooled container, twelve battery clusters 20 are arranged inside the container body 10, and each battery cluster 20 is corresponding to one fire-fighting device 31, the mass of the fire-fighting gas ejected by each of the fire-fighting devices 31 is 2.6kg, the concentration of the flammable gas, i.e., n-heptane, in the corresponding B-type n-heptane fire is 12.61% in terms of volume ratio, and the time required for the twelve fire-fighting devices 31 to extinguish the fire is 12 seconds, all of which met the requirements of the regulation.

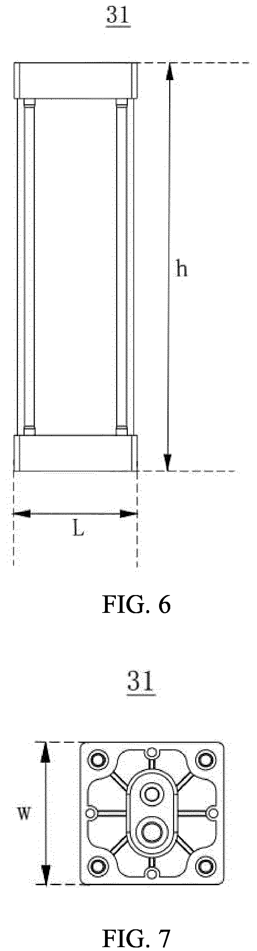

As shown in FIGS. 6 and 7, each fire-fighting device 31 includes a length, a width and a height, and each fire-fighting device 31 satisfies any one or at least two of the following conditions. The length range of each fire-fighting device 31 is set to range from 50mm to 200mm. The width range of each fire-fighting device 31 is set to range from 50mm to 200mm. The height of each fire-fighting device 31 is set to range from 200mm to 500mm. The size of the single one fire-fighting device 31 is significantly reduced relative to the size of the large-scale fire-fighting device in the related art, thereby facilitating the uniform arrangement of the plurality of fire-fighting devices 31 in the spacing between the top portions of the plurality of battery clusters 20 and the top cover 11.

A plurality of the fire-fighting devices 31 may be provided in the same size and specification. Or, according to the different arrangement positions of the fire-fighting devices 31, a part of the fire-fighting devices 31 may be provided in a size and specification, and another part of the fire-fighting devices 31 may be provided in another size and specification. For example, the length×width×height representing the dimension of each of the fire-fighting devices 31 is set to 112mm×112mm×376mm. The height space occupied by the fire-fighting devices 31 in the height direction of the energy storage container 1 is only 112mm. In this way, the height space occupied by the fire-fighting devices 31 in the height direction of the container body 10 can be significantly reduced.

The length L or the width W of each fire-fighting device 31 may be set to 50 mm, 70 mm, 90mm, 110mm, 130mm, 150 mm, 170mm, 190mm, or a value between any two of the above values, or a range between any two of the above values. The height h of each fire-fighting device 31 may be set to 200 mm, 250mm, 300 mm, 350mm, 400mm, 450mm, 500 mm, or a value or a range between any two of the above values.

Taking the 20-foot 5MWh liquid-cooled energy storage container 1 as an example, the length of the container body 10 is set to 6200mm, the width of the container body 10 is set to 2550mm, and the height of the container body 10 is set to 2896mm. Twelve battery clusters 20 are provided inside the container body 10. Every six battery clusters 20 is provided at intervals along the length direction of the container body 10. Each battery cluster 20 includes eight battery modules 21 laminated along the height direction of the container body 10. Every two battery clusters 20 are provided at intervals along the width direction of the container body 10. A fire-fighting device 31 is provided between the top portion of each battery cluster 20 and the top cover 11. If the length or the width of the single one fire-fighting device 31 is set to be greater than 200 mm, the plurality of fire-fighting devices 31 are horizontally arranged inside the container body 10, which causes the fire-fighting devices 31 to occupy more height space of the inside of the container body 10. As a result, eight battery modules 21 cannot be placed in the height direction of the container body 10, thereby affecting the capacity of the energy storage container 1. If the length or the width of the single fire-fighting device 31 is set to be less than 50 mm, the capacity of the single fire-fighting device 31 itself may be insufficient, and thus the overall fire-fighting capacity of the fire-fighting devices 31 may be insufficient. Further, if the height of the single fire-fighting device 31 is set to be greater than 500 mm, the height of the fire-fighting device 31 may be set to be greater than the width of the individual battery cluster 20, while other electrical components cannot be further placed at the top portion of the battery cluster 20, thereby affecting the normal structural design of the energy storage container 1. If the height of the individual fire-fighting device 31 is set to be less than 200 mm, the capacity of the individual fire-fighting device 31 itself may be insufficient, thereby causing the overall fire-fighting capability of the fire-fighting devices 31 to be insufficient.

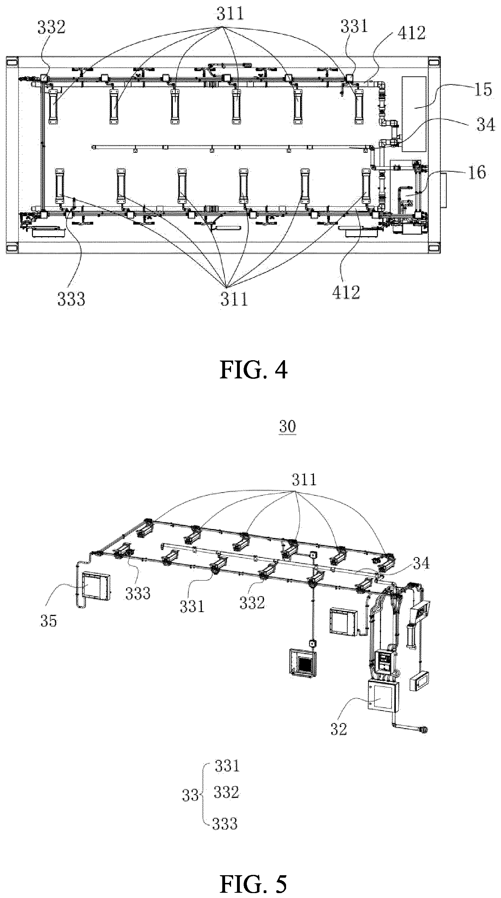

With continued reference to FIGS. 3 and 4, each of said fire-fighting devices 31 corresponds to at least one of the battery clusters 20, and the plurality of fire-fighting devices 31 are arranged to be at least two fire-fighting device rows 311.

It should be noted that the number of the fire-fighting device rows 311 corresponds to the number of the battery clusters 20 arranged in the width direction of the container body 10. For example, two rows of the battery clusters 20 are arranged in the width direction of the container body 10, and correspondingly two fire-fighting device rows 311 are formed in the container body 10. When three rows, four rows or five rows of the battery clusters 20 are arranged in the width direction of the container body 10, and correspondingly three, four or five fire-fighting device rows 311 are formed in the container body 10.

By arranging the plurality of fire-fighting devices 31 as the fire-fighting device rows 311, it is advantageous to evenly disperse the fire-fighting devices 31 on the top cover 11.

As shown in FIG. 5, the fire-fighting system 30 further includes a fire-fighting box 32 mounted on and protruding out of the container body 10. The fire-fighting box 32 is integrated with at least two of a fire-fighting controller, a manual fire-alarm switch, and a fire-emergency stop switch. The fire-fighting box 32 is electrically connected to the plurality of fire-fighting devices 31 to control whether the plurality of fire-fighting devices 31 are open.

By integrating the fire-fighting controller, the manual fire-alarm switch, the fire emergency stop switch, and the like in the fire box 32, it is convenient to install and concentratively arrange the connecting wiring harnesses, thereby saving the internal space of the energy storage container 1 sufficiently.

Further, by attaching the fire-fighting box 32 to the container body 10 and protruding the fire-fighting box 32 out of the container body 10, the space inside the container body 10 occupied by the fire box 32 is decreased as much as possible.

Further referring to FIGS. 4 and 5, the fire-fighting system 30 further includes a plurality of fire-fighting detectors 33. The fire-fighting detectors 33 are electrically connected to the fire-fighting box 32 to control whether or not the plurality of fire-fighting devices 31 are turned on in accordance with detection results of the plurality of fire-fighting detectors 33. The plurality of fire-fighting detectors 33 includes a plurality of smoke sensor detectors 331, a plurality of temperature sensor detectors 332, and a combustible gas detector 333. The plurality of smoke sensor detectors 331 and the plurality of temperature sensor detectors 332 are spaced apart outside at least two fire-fighting device rows 311. The combustible gas detector 333 is disposed between two adjacent fire-fighting devices 31 of the same fire-fighting device row 311.

The plurality of fire detectors 33 are connected to the fire box 32. The temperature sensor detectors 332 and the smoke sensor detectors 331 are installed inside the energy storage container 1 to facilitate monitoring of the temperature and the smoke inside the energy storage container 1. Upon detection of a fire risk, the fire box 32 can send an alarm signal in time.

Further, by arranging the plurality of fire-fighting detectors 33 at intervals on the outside of the plurality of fire-fighting devices 31, it is advantageous, on the one hand, to concentratively arrange the plurality of fire-fighting detectors 33, and thus make full use of the top space between the battery modules 21 and the top cover 11, and, on the other hand, to concentratively arrange the connecting harnesses so as to facilitate installation.

With continued reference to FIGS. 4 and 5, the fire-fighting system 30 further includes a fire-fighting conduit 34. One end of the fire-fighting conduit 34 is used for connecting a fire-fighting source, and the other end of the fire-fighting conduit 34 is located between two adjacent fire-fighting device rows 311.

An inlet end of the fire-fighting conduit 34 extends to the outside of the energy storage container 1, and an outlet end portion of the fire-fighting conduit 34 extends among the fire-fighting device rows 311. When an alarm signal is received from the outside, water is injected into the inlet end of the fire-fighting conduit 34, and the water is discharged through the outlet end of the fire-fighting conduit 34, so that the fire can be quickly and effectively extinguished by directly discharging the water corresponding to the top portion of the plurality of batteries 20.

As shown in FIGS. 2 and 5, the container body 10 includes the multiple side plates 13 connected between the top cover 11 and the bottom cover 12. The multiple side plates 13 surround the side portions of the battery compartment 14. The multiple side plates 13 are provided with multiple mounting ports. The fire-fighting system 30 further includes multiple fire-fighting fans 35. Each of the fire-fighting fans 35 is mounted to a corresponding one of the mounting ports. The fire-fighting fans 35 are not protruded from the inner surfaces of the side plates 13. So, it may further reduce occupation of the inner space of the container body 10 by the fire-fighting fans 35.

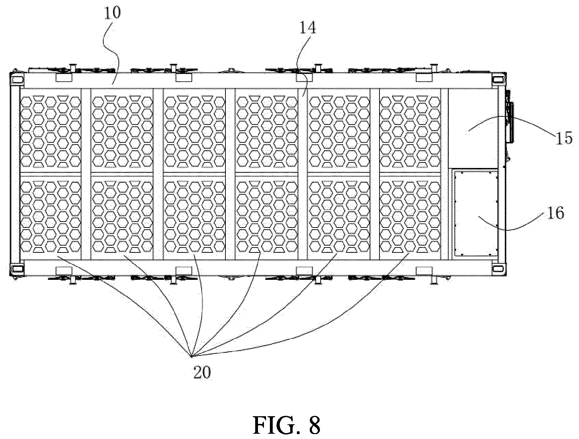

Further referring to FIGS. 1 and 8, the inside of the container body 10 is provided with a liquid cooling compartment 15. The liquid cooling compartment 15 is spaced apart from the battery compartment 14 along the length direction of the container body 10. The liquid cooling compartment 15 is used for holding a liquid cooling apparatus having a thickness of not more than 500 mm.

By separating apart the liquid cooling compartment 15 and the battery compartment 14 along the length direction of the container body 10, and by controlling the thickness of the liquid cooling apparatus not to exceed 500 mm, it is advantageous to make full use of the space in the length direction of the container body 10.

With continued reference to FIGS. 1 and 8, the interior of the container body 10 is further provided with an electric compartment 16 spaced apart from the liquid cooling compartment 15 in the width direction of the container body 10. The electric compartment 16 is used to hold a combiner cabinet 17 and a power distribution cabinet 18. The combiner cabinet 17 and the power distribution cabinet 18 are integrally provided. Either or both of the combiner cabinet 17 and the power distribution cabinet 18 have a thickness of not more than 500 mm.

The separation of the electric compartment 16, the liquid cooling compartment 15 and the battery compartment 14 facilitates the temperature and humidity control of the electric compartment 16, the liquid cooling compartment 15 and the battery compartment 14 independently. On the one hand, it may facilitate operation of electric devices such as the combiner cabinet 17 and the power distribution cabinet 18 inside the electric compartment 16 in an appropriate operating environment, thereby improving the stability and the reliability of the electric devices such as the combiner cabinet 17 and the power distribution cabinet 18. On the other hand, the temperature and humidity control is performed independently on the battery compartment 14, so that the operating environment of the battery modules 21 can be controlled, thereby prolonging the service lives of the battery modules 21.

Further, by integrally arranging the combiner cabinet 17 and the power distribution cabinet 18, it is advantageous to minimize the design space of the electric compartment 16.

In a further preferred embodiment, either or both of the combiner cabinet 17 and the power distribution cabinet 18 are subjected to an extremely narrow design. For example, in the 20-foot 5MWh liquid-cooled energy storage container 1, the thicknesses of both the combiner cabinet 17 and the power distribution cabinet 18 are set to not more than 500 mm, thereby facilitating full utilization of the space in the longitudinal direction of the container.

Partition plates are provided inside the energy storage container 1 for separating the battery compartment 14, the liquid cooling compartment 15, and the electric compartment 16. By separating the battery compartment 14 from the electric compartment 16 or the liquid cooling compartment 15 along the length direction of the energy storage container 1, and by separating the electric compartment 16 and the liquid cooling compartment 15 along the width direction of the energy storage container 1, it may further facilitate to improve the space of the battery compartment 14, thereby facilitating the arrangement of a sufficient number of battery modules 21 in a limited space, and thus improving the space utilization rate of the energy storage container 1.

As shown in FIGS. 1 and 4, the multiple battery clusters 20 are connected to the multiple liquid cooling plates, and a plurality of liquid cooling pipes 40 are provided in the energy storage container 1. The liquid cooling pipes include a first-stage pipeline 41, multiple second-stage pipelines 42, and multiple third-stage pipelines 43. The first-stage pipeline 41 is connected to the liquid cooling plates through the second-stage pipelines 42 and the third-stage pipelines 43. The first-stage pipeline 41 includes a water inlet pipe 411 and a water return pipe 412. The water return pipe 412 is located between the battery modules 21 and the at least two fire-fighting device rows 311, and located outside the at least two fire-fighting device rows 311.

The second-stage pipelines 42 are arranged to be branched by the first-stage pipeline 41, and the third-stage pipelines 43 are arranged to be branched by the second-stage pipelines 42. Each of the second-stage pipelines 42 is arranged in a single pipe structure.

The first-stage pipeline 41 includes the water return pipe 412 at the top and between the battery modules 21 and the at least two fire-fighting device rows 311, and the water inlet pipe 411 at the bottom and disposed adjacent to the bottom cover 12. The second-stage pipeline 42 is disposed as a second-stage liquid cooling pipeline extending between the water inlet pipe 411 and the water return pipe 412. The second-stage pipelines 42 are disposed in parallel between the water inlet pipe 411 and the water return pipe 412. Each second-stage pipeline 42 is disposed substantially corresponding to a single battery cluster 20. The second-stage pipeline 42 is disposed as a single pipe structure, so that the second-stage pipeline 42 with the single pipe structure enables shorten the size of the upright post of the battery bracket, thereby saving the size of the length space of the energy storage container 1, with respect to the related art in which the second-stage pipeline is generally disposed as a two-stage pipe structure or a multi-pipe structure.

Further, the water return pipe 412 is provided between the battery modules 21 and the at least two fire-fighting device rows 311, and is located outside the at least two fire-fighting device rows 311, thereby making full use of the space in the height direction of the container body 10.

Further referring to FIG. 2, the energy storage container 1 further includes multiple dehumidifiers 50 horizontally distributed in a space between bottom portions of the multiple battery modules 21 and the bottom cover 12.

With respect to the related art in which the dehumidifiers are mounted on the side plates so that the mounting space of the dehumidifiers needs to be reserved along the length direction of the container body, in the embodiment of the present application, the sizes of the dehumidifiers 50 are miniaturized, and the multiple dehumidifiers 50 are dispersedly arranged at the spacing between the bottom potions of the battery modules 21 and the bottom cover 12, and the dehumidifiers 50 are horizontally arranged inside the container body 10. In this way, it may effectively improve the space in the height direction of the container body 10 required for arranging the dehumidifier 50, thereby further improving the space utilization rate of the energy storage container 1.

## Claims

1. An energy storage container (1) comprising:
a container body (10) comprising a top cover (11) and a bottom cover (12) oppositely disposed, wherein the container body (10) is provided with a battery compartment (14), the top cover (11) and the bottom cover (12) surround a top portion and a bottom portion of the battery compartment (14), respectively;
a plurality of battery clusters (20) disposed in the battery compartment (14), wherein each of the plurality of battery clusters (20) comprises a plurality of battery modules (21); and
a fire-fighting system (30) comprising a plurality of fire-fighting devices (31) uniformly dispersedly arranged among the plurality of battery clusters (20) and the top cover (11).

2. The energy storage container (1) according to claim 1, wherein each of the plurality of fire-fighting device (31) comprises a fire bottle horizontally mounted on the top cover (11).

3. The energy storage container (1) according to claim 1 or 2, wherein a ratio of the number of the fire-fighting devices (31) to the number of the plurality of battery clusters (20) in the container body (10) is greater than 1/2; and a mass of fire-fighting gas ejected by each of the fire-fighting devices (31) ranges from 2kg to 3kg.

4. The energy storage container (1) according to any one of claims 1 to 3, wherein the fire-fighting device (31) satisfies one or more of:
a length of the fire-fighting device is set to 50mm~200mm;
a width of the fire-fighting device is set to 50mm~200mm;
a height of the fire-fighting device is set to 200mm~500mm.

5. The energy storage container (1) according to any one of claims 1 to 4, wherein each of the plurality of fire-fighting devices (31) corresponds to at least one of the plurality of battery clusters (20), and the plurality of fire-fighting devices (31) are arranged to be at least two fire-fighting device rows (311).

6. The energy storage container (1) according to claim 5, wherein the fire-fighting system (30) further comprises a fire-fighting box (32) mounted on and protruding out of the container body (10), the fire-fighting box (32) is integrated with a fire-fighting controller, a manual fire alarm switch and a fire-emergency stop switch, and the fire-fighting box (32) is electrically connected to the plurality of fire-fighting devices (31) to control turn on and turn off of the plurality of fire-fighting devices (31).

7. The energy storage container (1) according to claim 6, wherein the fire-fighting system (30) further comprises a plurality of fire-fighting detectors (33), the fire box (32) is electrically connected to the plurality of fire-fighting detectors (33) to control the turn on and the turn off of the plurality of fire-fighting devices (31) in accordance with detection results of the plurality of fire-fighting detectors (33), wherein the plurality of fire-fighting detectors (33) comprise a plurality of smoke sensor detectors (331), a plurality of temperature sensor detectors (332) and a combustible gas detector (333), the plurality of smoke sensor detectors (331) and the plurality of temperature sensor detectors (332) are spaced outside the at least two fire-fighting device rows, and the combustible gas detectors is disposed between two adjacent of the fire-fighting devices (31) of a same one of the at least two fire-fighting device rows (311).

8. The energy storage container according to claim 6, wherein the fire-fighting system (30) further comprises a plurality of fire-fighting detectors (33), and the plurality of fire-fighting detectors are spaced outside the plurality of fire-fighting devices.

9. The energy storage container (1) according to claim 5, wherein the fire-fighting system (30) further comprises a fire-fighting conduit (34), an end of the fire-fighting conduit (34) is configured to connect to a fire source, and an other end of the fire-fighting conduit (34) is located between two adjacent of the at least two fire-fighting device rows.

10. The energy storage container according to any one claims 1 to 9, wherein the container body (10) comprises a plurality of side plates (13) connected between the top cover (11) and the bottom cover (12), the plurality of side plates (13) surround sides of the battery compartment (14), the fire-fighting system (30) further comprises a plurality of fire-fighting fans (35) mounted to the side plates (13), and the fire-fighting fans (35) are not protruded from inner surfaces of the side plates (13).

11. The energy storage container (1) according to claim 5, wherein the container body (10) is further comprises a liquid cooling compartment (15), the liquid cooling compartment (15) and the battery compartment (14) are arranged along a length direction of the container body (10) and spaced apart from each other, and the liquid cooling compartment (15) is configured to hold a liquid cooling device;
an inside of the container body (10) is further internally provided with an electric compartment (16), the electric compartment (16) and the liquid cooling compartment (15) are arranged in a width direction of the container body (10) and spaced apart from each other, and the electric compartment (16) is configured for holding either or two of a combiner cabinet (17) and a power distribution cabinet (18).

12. The energy storage container (1) according to claim 11, wherein the combiner cabinet (17) and the power distribution cabinet (18) are integrally arranged, and thicknesses of both the combiner cabinet (17) and the power distribution cabinet (18) are not more than 500 mm.

13. The energy storage container (1) according to claim 11, wherein the plurality of battery clusters (20) are connected to a plurality of liquid cooling plates, the energy storage container is provided with a plurality of liquid cooling pipes (40), the plurality of liquid cooling pipes (40) comprise a first-stage pipeline (41), a plurality of second-stage pipelines (42), a plurality of third-stage pipelines (43), the first-stage pipeline (41) is connected to the plurality of liquid cooling plates by the plurality of second-stage pipelines (42) and the plurality of third-stage pipelines (43), the first-stage pipeline (41) comprises a water inlet pipe (411) and a water return pipe (412), and the water return pipe (412) is located between the plurality of battery modules (21) and the at least two fire-fighting device rows (311), and outside the at least two fire-fighting device rows (311).

14. The energy storage container according to claim 13, wherein the plurality of second-stage pipelines are branched from the first-stage pipeline, each of the plurality of second-stage pipeline braches ones of the plurality of third-stage pipelines, and each of the plurality of second-stage pipelines is configured as a single pipe structure.

15. The energy storage container (1) according to any one of claims 1 to 14, wherein the energy storage container further comprises a plurality of dehumidifiers (50) horizontally distributed between bottom potions of the plurality of battery modules (21) and the bottom cover (12).
